(19) Europäisches Patentamt
European Patent Office
Office européen des brevets

(11) **EP 1 807 948 B1**

(12) **EUROPÄISCHE PATENTSCHRIFT**

(45) Veröffentlichungstag und Bekanntmachung des Hinweises auf die Patenterteilung:
**05.07.2017 Patentblatt 2017/27**

(51) Int Cl.:
*H04B 10/079* (2013.01)    *H04B 10/293* (2013.01)

(21) Anmeldenummer: **05794700.4**

(86) Internationale Anmeldenummer:
**PCT/EP2005/054808**

(22) Anmeldetag: **26.09.2005**

(87) Internationale Veröffentlichungsnummer:
**WO 2006/035009 (06.04.2006 Gazette 2006/14)**

(54) **ERMITTLUNG DER VERSTÄRKTEN SPONTANEN EMISSION IN EINEM OPTISCHEN FASERVERSTÄRKER**

DETERMINATION OF THE AMPLIFIED SPONTANEOUS EMISSION IN AN OPTICAL FIBRE AMPLIFIER

DETERMINATION DE L'EMISSION SPONTANEE AMPLIFIEE DANS UN AMPLIFICATEUR OPTIQUE A FIBRE

(84) Benannte Vertragsstaaten:
**DE FR**

(30) Priorität: **30.09.2004   DE 102004047745**

(43) Veröffentlichungstag der Anmeldung:
**18.07.2007   Patentblatt 2007/29**

(73) Patentinhaber: **Xieon Networks S.à r.l.
2633 Senningerberg (LU)**

(72) Erfinder:
• **RAPP, Lutz
82041 Deisenhofen (DE)**
• **PEISL, Wolfgang
81245 München (DE)**

(74) Vertreter: **Lucke, Andreas et al
Boehmert & Boehmert
Anwaltspartnerschaft mbB
Pettenkoferstrasse 22
80336 München (DE)**

(56) Entgegenhaltungen:
**EP-A- 1 085 683     EP-A- 1 130 802
US-A- 6 064 501**

• **FLOOD F A: "Temperature dependent behaviour of C-band and L-band EDFAs: A comparison" ELECTRONICS LETTERS, IEE STEVENAGE, GB, Bd. 35, Nr. 12, 10. Juni 1999 (1999-06-10), Seiten 1001-1003, XP006012256 ISSN: 0013-5194**

**Beschreibung**

Die Erfindung betrifft ein Verfahren zur Ermittlung der verstärken spontanen Emission (ASE = Amplified Spontaneous Emission) in einem optischen Faserverstärker nach dem Oberbegriff der Patentansprüche 1 und 4, und einen mehrstufigen optischen Faserverstärker nach den Oberbegriff der Patentansprüche 12 und 13.

Moderne Erbium-dotierte Faserverstärker für WDM-System mit sehr großen Reichweiten weisen in der Regel drei Verstärkerstufen mit Verstärkungsfasern, die durch Komponenten wie variable Dämpfungsglieder und dispersionskompensierende Fasern getrennt sind, auf und besitzen eine kombinierte Gewinn- und Ausgangsleistungsregelung.

Zur Messung einer Summensignalleistung am Eingang und am Ausgang des Verstärkers werden in der Regel Photodioden verwendet, deren Messsignale allerdings verfälscht sein können, da den Signalen Rauschen in Form der verstärkten spontanen Emission ASE überlagert ist. Vor allem bei kleinen Kanalzahlen eines zu verstärkenden WDM-Signals (WDM = Wavelength Division Multiplex) kann der sich dadurch ergebende relative Fehler groß werden, insbesondere da moderne Empfänger mit verbesserten Fehlerkorrekturverfahren (wie durch EFEC=Enhanced Forward Error Correction) geringe Signal- Rauschabstände zulassen.

Um die geforderte Signalausgangsleistung einstellen zu können, ist es daher erforderlich, das Messsignal um die überlagerte verstärkte spontane Emission ASE zu korrigieren, indem die in den einzelnen Verstärkern generierten verstärkten spontanen Emissionen ASE möglichst genau geschätzt werden.

Bekannte Verfahren verwenden folgende Näherung zur Berechung der in einem EDFA (C-Band-Verstärker mit optischer Bandbreite $B_{opt}$ =4,44 THz) erzeugten ASE-Leistung (Leistung der verstärkten spontanen Emission ASE):

$$P^{ASE} = \hbar\nu \cdot B_{opt} \cdot nf \cdot g = 0.57045 \cdot 10^{-3} \cdot nf \cdot g \; \{MW\}$$

wobei $B_{out}$ für die optische Bandbreite steht, $\nu$ die mittlere Trägerfrequenz der Signale bezeichnet (typisch:193.40THz, 1550nm), die Variable g den EDFA-Gewinn repräsentiert und nf die EDFA-Rauschzahl bezeichnet.

In der Regel liegt die EDFA-Rauschzahl nf für wenige Betriebspunkte der EDFA-Eingangsleistung und des EDFA-Gewinns im 40-Kanal-Betrieb tabelliert vor. Eine exakte Berechnung der erzeugten ASE-Leistung ist daher nicht möglich, da:

- eine Variation der passiven Verluste im EDFA deutliche Änderungen hervorrufen kann,

- spektrale Formfaktoren (z.B. des eingesetzten Gain-Flattening-Filters) unberücksichtigt bleiben,

- die EDFA-Rauschzahl bei Betrieb mit wenigen Kanälen (1...10) deutlich von den tabellierten Werten für den 40-Kanalbetrieb abweichen kann, d.h. die Rauschzahl hängt neben der Eingangsleistung und neben dem Gewinn auch von der aktuellen Kanalbelegung ab.

Bei einem dreistufigen optischen Faserverstärker stößt eine Charakterisierung des Verstärkers lediglich als Funktion des Gesamtgewinns vom Eingang zum Ausgang und als Funktion der Eingangsleistung relativ rasch an Genauigkeitsgrenzen, da bei gleichem Gewinn die passiven Verluste zwischen den einzelnen Stufen stark variieren können, was einen starken Einfluss auf die erzeugte ASE-Leistung hat.

Aus EP 1085 683 A1 ist ein optisches WDM System bekannt, die Ausgangsleistung eines optischen Verstärkers unter Berücksichtigung der ASE geregelt wird. Die ASE wird für unterschiedliche Verstärkungen anhand einer vorgegebenen Beziehung zur Verstärkung geschätzt und bei einer gemessenen Ausgangsleistung berücksichtigt.

Der Patentanmeldung EP 1 130 802 A1 fasst sich ebenfalls mit der Stabilisierung eines optischen Verstärkers unter Berücksichtigung der ASE. Der Verstärker weist eine Kontrolleinrichtung auf, die auch die ASE-Leistung bei einer vorgegebenen Beziehung zur Verstärkung berechnet. Die ermittelte ASE wird bei der Stabilisierung der Ausgangsleistung berücksichtigt.

Die beschriebenen Verstärkertypen entsprechen nicht mehr den heutigen Anforderungen, da deren spektrale Verstärkung sich mit den Eingangspegeln ändert. Bei den erfindungsgemäßen Ver stärkern wird von einer konstanten Verstärkung der Verstärkerstufen und damit einer konstanten Inversion ausgegangen.

Das Patent US 6,064,501 befasst sich mit der Überwachung der Funktion eines optischen Verstärkers. Eine Möglichkeit ist dabei die ASE Überwachung, bei der die erwartete ASE mit der gemessenen verglichen wird. Hier sind auch ASE-Berechnungsmöglichkeiten angegeben.

Aufgabe der vorliegenden Erfindung ist es, ein Verfahren anzugeben, mit dem die in einem ein- bis mehrstufigen Faserverstärker EDFA erzeugte verstärkte spontane Emission ASE mit hoher Genauigkeit bestimmt werden kann.

Eine Lösung der Aufgabe erfolgt hinsichtlich ihres Verfahrensaspekts durch ein Verfahren mit den Merkmalen des Patentanspruchs 1 und ein Verfahren mit den Merkmalen des Anspruchs 4 und hinsichtlich eines mehrstufigen optischen Faserverstärker nach Patentansprüchen 12 oder 13.

Vorteilhafte Weiterbildungen der Erfindung sind in den Unteransprüchen angegeben.

Das erfindungsgemässe Verfahren zur Ermittlung, d.h. zur Leistungsermittlung einer verstärkten spontanen Emission ASE bei einem optischen Faserverstärker, d.h. mit beliebig vielen seriell geschalteten Verstärkerstufen (die wenigstens eine gepumpte Verstärkungsfaser aufweisen), beruht auf einem Konzept ggf. auf einer Annäherung, das/die anhand eines einstufigen Faserverstärker hergeleitet werden kann. Es kann tatsächlich gezeigt werden, dass, bei gleichbleibender mittlerer Inversion oder gleichbleibendem Gewinn einer Verstärkerstufe, die in dieser Verstärkerstufe erzeugte verstärkte spontane Emission nahezu unabhängig von der Eingangsleistung ist. Dieser Aspekt eignet sich sehr gut für eine Bestimmung einer ASE-Leistung (= Leistung der verstärkten spontanen Emission ASE) der einzelnen Verstärkerstufe.

Bei mehrstufigen Verstärkerstufen in einem optischen Faserverstärker können erstmals alle Beiträge (in Sinne von Leistungen) der einzelnen Verstärkerstufen nach dem vorherigen Konzept errechnet werden. Ferner werden mitwirkende ASE-Beiträge einer Verstärkerstufe auf eine andere Verstärkerstufe ebenfalls ermittelt.

Am Ausgang des gesamten Faserverstärkers wird die gesamte verstärke spontane Emission ASE als eine Summe von ASE-Beiträgen, die in einzelnen Verstärkerstufen generiert werden, multipliziert mit den Transmissionsfunktionen nachfolgender Komponenten einfach und schnell ermittelt.

Ferner wird gezeigt, dass die Ermittlung der einzelnen Terme der Summation mit Hilfe von wenigen Parametern erfolgen kann, die als vordefinierte Werte dem Verfahren dienen. Z.B. für einen dreistufigen Faserverstärker werden ausgehend von nur 2 Inversionswerten lediglich 6 Parameter benötigt, um anhand einer Tabelle (zur Bereitstellung der vordefinierten Werte) alle 6 Beiträge der ASE-Leistung direkt in Verbindung mit einer Eingangleistung zu ermitteln. Diese Tabelle kann am Beginn der Inbetriebnahme des optischen Faserverstärkers bzw. direkt nach Fertigstellung der Verstärkerkarte (mit dem integrierten optischen Faserverstärker) mittels einer Kalibrierung erzeugt werden, sowie auch regelmässig während des Betriebs aktualisiert werden (z.B. zur Berücksichtigung von Alterungseffekten). Der Begriff "Tabelle" ist hier im allgemeinen Sinn zu verstehen. Die vordefinierten Werte könnten ebenfalls z.B. elektronisch auf einer Chip-Karte gespeichert werden, in einer vollkommen anderen Form als einer Tabelle. Hauptsache ist die Kenntnis der vordefinierten Werte als Funktion einer oder ggf. mehrerer Inversion(en) bei einer oder mehreren Verstärkerstufe(n).

Mehrere Ausführungsbeispiele der Erfindung auf Basis eines zweistufigen und eines dreistufigen Faserverstärkers, werden im Folgenden hinsichtlich der Verfahrensaspekte und der Vorrichtungsaspekte näher erläutert. Daraus wird ein Fachmann herleiten können, wie eine Ermittlung der gesamten verstärkten spontanen Emission für beliebig mehrstufige Faserverstärker gemäss der Erfindung erfolgt.

Das Verfahren kann ebenfalls für ein optisches Übertragungssystem mit wenigstens einer Übertragungsfaser und wenigstens einem geschalteten optischen Faserverstärker angewendet werden.

Vorausgesetzt wird im Folgenden, dass die spektrale Form des Eingangsspektrums des optischen Faserverstärkers bekannt ist oder zumindest eine Abschätzung vorliegt. Eine Regelung stellt die Leistungen von Pumpsignalen so ein, dass gewisse Randbedingungen für die Leistungen der zu verstärkenden Signale an den Ausgängen der einzelnen Verstärkerstufen eingehalten werden. So ist es im Hinblick auf nichtlineare Effekte zum Beispiel sinnvoll, den Gewinn einer zweiten Verstärkerstufe derart zu wählen, dass der stärkste Kanalpegel am Eingang einer dispersionskompensierenden Faser einen gewissen optimalen Leistungswert aufweist.

Sofern das Gewinnprofil einzelner Verstärkerstufen z. B. eines Erbium-dotierten Faserverstärkers EDFA charakterisiert wurde, kann für jede Verstärkerstufe die einzustellende mittlere Inversion bestimmt werden. Mit diesen Kenndaten kann die in dem Erbium-dotierten Faserverstärker EDFA generierte ASE-Leistung an einzelnen Messpunkten bestimmt werden und somit die gewünschte Signalleistung mit hoher Genauigkeit bestimmt werden.

Ein Ausführungsbeispiel der Erfindung wird ebenfalls im Folgenden anhand der Zeichnung näher erläutert.

Dabei zeigt:

Fig. 1    eine in einer Verstärkerstufe generierte ASE-Leistung als Funktion der Eingangsleistung für verschiedene Gewinnwerte,

Fig. 2    einen einstufigen optischen Faserverstärker,

Fig. 3    einen dreistufigen optischen Faserverstärker.

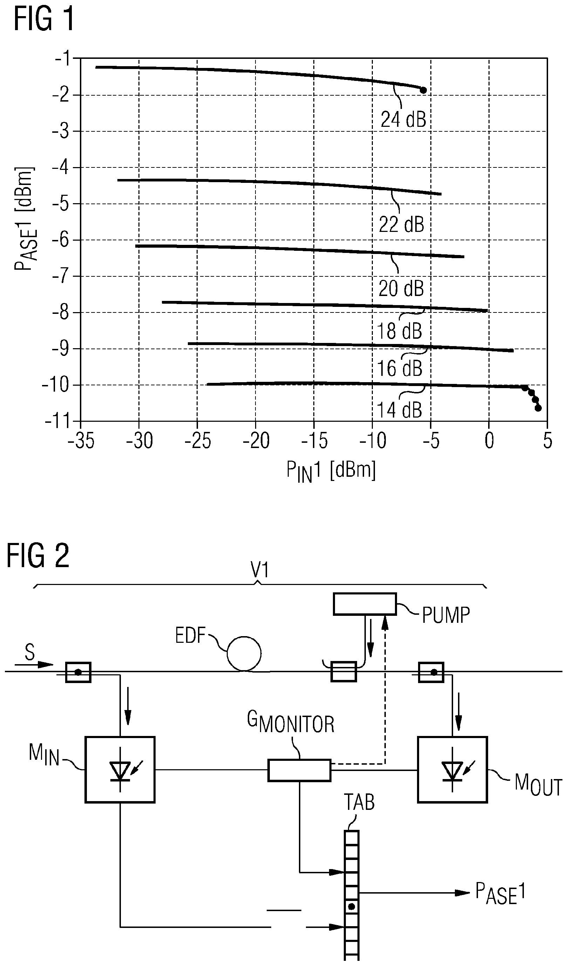

In **Figur 1** sind sechs Profile der in einer einzelnen Verstärkerstufe generierte ASE-Leistung $P_{ASE}$ der verstärkten spontanen Emission ASE in einem einstufigen Faserverstärker bei entsprechenden Gewinnwerten G=14, 16, 18, 20, 22, 24 dB als Funktion der Eingangsleistung $P_{IN}1$ des in den Faserverstärker eingehenden optischen Signals dargestellt. Der Gewinn einer Verstärkerstufe mit einer Verstärkungsfaser (z.B. einer Erbium-dotierten Faser) hängt ausschließlich von einem Mittelwert der Inversion $\chi$ dieser Verstärkerstufe, jedoch nicht von deren Verlauf ab. In guter Näherung kann dies auch für die in der Verstärkerstufe mit einer Pumpe generierte ASE-Leistung angenommen werden. Bei sämtlichen zu einer der sechs Kurven gehörenden Punkten ist die mittlere Inversion der Erbium-dotierten Faser konstant gehalten. In einem sehr weiten Bereich der Signaleingangsleistungen ist die generierte ASE konstant und erst bei sehr großen Leistungen nimmt die ASE-Leistung ab. Berücksichtigt man, dass eine ASE-Korrektur nur bei kleinen Signaleingangsleistungen von Bedeutung ist, kann die Abhängigkeit der Rauschleistung von der Eingangsleistung bei einer Ermittlung der ASE vernachlässigt werden. Unter Umständen kann auch die geringfügige Abhängigkeit von der Eingangsleistung noch berücksichtigt werden.

Aus Figur 1 wird nun zu Zwecken der Veranschaulichung die Ausgangsleistung $P_{11}^{ASE}$ der verstärkten spontanen Emission ASE am Ausgang der ersten Verstärkerstufe V1 eines **einstufigen Faserverstärkers** berechnet, die Berechnung der ASE bei einem Faserverstärker, der insgesamt nur eine Verstärkerstufe enthält, ist aber nicht Ausführungsform der vorliegenden Erfindung.

Verfahrensmässig wird für eine gemessene Eingangsleistung $P_{IN}1$ eine vorgegebene Ausgangsleistung $P_{OUT}1$ eingestellt und daraus eine mittlere Inversion $\chi_I$ der Verstärkerstufe V1 ermittelt. Ein solches Vorgehen kann auch durch eine Vorgabe eines vorgegebenen Gewinnwertes anstelle der Ausgangsleistung $P_{OUT}1$ erfolgen. Derartige Vorgaben am Ende der Verstärkerstufe sind wichtig, z.B. damit keine zu hohen bzw. zu niedrigen Leistungspegel am Ausgang des Faserverstärkers auftreten.

In anderen Worten wird gemäss Figur 1 die Ausgangsleistung $P_{11}^{ASE}$ der verstärkten spontanen Emission ASE sofort ermittelt nach Kenntnis von:

- der Eingangsleistung und der mittleren Inversion oder

- der Eingangsleistung und dem Gewinnwert oder

- der Eingangsleistung und der Ausgangsleistung.

Beispielsweise kann in der ersten Verstärkerstufe V1 eine ASE-Leistung $P_{11}^{ASE}$ bei einer Rauschleistungsdichte $S_I^{ASE}(\lambda, \chi_I)$ erzeugt werden, die von der mittleren Inversion $\chi_I$ der ersten Verstärkerstufe V1 abhängt. Ihr Beitrag zu einer gesamten ASE-Leistung $P_{ASE}1$ am Ausgang der ersten Verstärkerstufe V1 beträgt:

$$P_{11}^{ASE} = \int_{\lambda_0}^{\lambda_1} S_I^{ASE}(\lambda, \chi_I)\, d\lambda = \tau_{11}(\chi_I)$$

wobei das Intervall $[\lambda_0, \lambda_1]$ denjenigen Wellenlängenbereich bezeichnet, in dem nennenswerte Leistungsanteile auftreten, und der erste Parameter $\tau_{11}(\chi_I)$ eine Funktion der ersten mittleren Inversion $\chi_I$ ist.

Wurden in einer Tabelle Werte des ersten Parameters $\tau_{11}(\chi_I)$ als Funktion der mittleren Inversion $\chi_I$ gespeichert, kann eine erste Ausgangsleistung $P_{11}^{ASE}$ der verstärken spontanen Emission ASE am Ausgang der ersten Verstärkerstufe V1 sofort ermittelt werden. Bei dem einstufigen Faserverstärker ist die gesamte ASE-Leistung $P_{ASE}1$ genau der Beitrag $P_{11}^{ASE}$.

Ferner wird ein optischer **zweistufiger Faserverstärker** betrachtet. Die ASE-Leistung am Ausgang der ersten Stufe wird wie oben für den einstufigen Fall beschrieben berechnet.

Nun trägt auch die erste Verstärkerstufe V1 zur ASE-Leistung am Ausgang der zweiten Verstärkerstufe V2 bei. Insgesamt setzt sich die ASE-Leistung am Ausgang der zweiten Stufe aus zwei Beiträgen $P_{12}^{ASE}$ und $P_{22}^{ASE}$ zusammen, die jeweils die in der ersten Stufe generierten ASE bzw. die in der zweiten Stufe generierte ASE berücksichtigen.

Der Beitrag der ersten Stufe zur gesamten ASE-Leistung am Verstärkerausgang kann wie folgt berechnet werden:

$$P_{12}^{ASE} = \int_{\lambda_0}^{\lambda_1} S_I^{ASE}(\lambda, \chi_I)\, G_{II}^{ASE}(\lambda, \chi_{II})\, a_I\, d\lambda = a_I \tau_{12}(\chi_I, \chi_{II}),$$

wobei $G_{II}^{ASE}\left(\lambda, \chi_{II}\right)$ den Gewinn der zweiten Verstärkerstufe V2 bei einer mittleren Inversion $\chi_{II}$ der zweiten Verstärkerstufe V2, $a_I$ die Dämpfung zwischen der ersten und der zweiten Verstärkerstufe und der Parameter $\tau_{12}(\chi_I, \chi_{II})$ eine Funktion der beiden mittleren Inversionen $\chi_I, \chi_{II}$ bezeichnen.

Schliesslich trägt die zweite Verstärkerstufe V2 zur gesamten ASE-Leistung am Ausgang der zweiten Stufe in ähnlicher Art und Weise wie die erste Verstärkerstufe V1 an deren Ausgang bei, so dass:

$$ P_{22}^{ASE} = \int_{\lambda_0}^{\lambda_1} S_{II}^{ASE}\left(\lambda, \chi_{II}\right) d\lambda = \tau_{22}\left(\chi_{II}\right) $$

wobei $S_{II}^{ASE}\left(\lambda, \chi_{II}\right)$ eine Leistungsdichte am Ausgang der zweiten Verstärkerstufe V2 ist und der Parameter $\tau_{22}(\chi_{II})$ eine Funktion der mittleren Inversion $\chi_{II}$ der zweiten Verstärkerstufe V2 darstellen.

Da ein Verstärker in der Regel in seinem Betriebszustand mit fest vorgegebenem Gewinnverlauf (z.B. flacher Gewinnverlauf, d.h. identischer Gewinn für alle Kanäle) betrieben wird, entspricht die mittlere Inversion beider Stufen einem vorgegebenen Wert, so dass die Parameter $\chi_I$ und $\chi_{II}$ linear voneinander abhängen. Die Matrix $\tau_{12}(\chi_I, \chi_{II})$ kann damit wiederum auf einen Vektor (Abhängigkeit nur von einer Variablen) reduziert werden. Bei Konstanthaltung des Gesamtgewinns aller optischer Verstärkerstufen V1, V2 hängen alle drei Parameter $\tau_{11}(\chi_I)$, $\tau_{12}(\chi_I)$, $\tau_{12}(\chi_I)$ nur von der mittleren Inversion $\chi_I$ ab.

Die Gesamtleistung $P_{ASE}2$ der verstärkten spontanen Emission ASE am Ausgang des zweistufigen optischen Faserverstärkers wird durch Addition der beiden Beiträge $P_{12}^{ASE}$ und $P_{22}^{ASE}$ errechnet.

Weiterhin kann diese Berechnung zur Ermittlung der ASE-Leistungsbeiträge für weitere mehrstufige Faserverstärker, wie im Folgenden für einen **dreistufigen Faserverstärker** V1, V2, V3, erfolgen.

Dabei müssen sechs Beiträge $P_{11}^{ASE}$, $P_{12}^{ASE}$, $P_{13}^{ASE}$, $P_{22}^{ASE}$, $P_{23}^{ASE}$, $P_{33}^{ASE}$ ermittelt werden. Die drei ersten Beiträge $P_{11}^{ASE}$, $P_{12}^{ASE}$, $P_{13}^{ASE}$ sind diejenigen aus der ersten Verstärkerstufe V1 zu jeder Verstärkerstufe V1, V2, V3. Die zwei weiteren Beiträge $P_{22}^{ASE}$, $P_{23}^{ASE}$ sind diejenigen aus der zweiten Verstärkerstufe V2 zu der zweiten und dritten Verstärkerstufe V2, V3. Der letzte Beitrag $P_{33}^{ASE}$ ist derjenige aus der dritten Verstärkerstufe V3 zu derselben dritten Verstärkerstufe V3.

Es gibt also folgender Zusammenhang:

**ASE-Leistung am Ausgang der ersten Stufe:**

$$ P_1^{ASE} = P_{11}^{ASE} $$

**ASE-Leistung am Ausgang der zweiten Stufe:**

$$ P_2^{ASE} = P_{12}^{ASE} + P_{22}^{ASE} $$

**ASE-Leistung am Ausgang der dritten Stufe:**

$$ P_3^{ASE} = P_{13}^{ASE} + P_{23}^{ASE} + P_{33}^{ASE} $$

Die Beiträge $P_{11}^{ASE}$, $P_{12}^{ASE}$ und $P_{22}^{ASE}$ lassen sich wie im vorherigen Ausführungsbeispiel mit zwei Verstärkerstufen berechnen:

$$P_{11}^{ASE} = \int_{\lambda_0}^{\lambda_1} S_I^{ASE}(\lambda, \chi_I)\, d\lambda = \tau_{11}(\chi_I)$$

$$P_{12}^{ASE} = \int_{\lambda_0}^{\lambda_1} S_I^{ASE}(\lambda, \chi_I)\, G_{II}^{ASE}(\lambda, \chi_{II})\, a_I\, d\lambda = a_I \tau_{12}(\chi_I, \chi_{II})$$

$$P_{22}^{ASE} = \int_{\lambda_0}^{\lambda_1} S_{II}^{ASE}(\lambda, \chi_{II})\, d\lambda = \tau_{22}(\chi_{II})$$

also als Funktion der mittleren Inversionen $\chi_I$, $\chi_{II}$ der ersten und der zweiten Verstärkerstufe V1, V2.

Der Beitrag $P_{13}^{ASE}$ kann wie folgt berechnet werden:

$$P_{13}^{ASE} = \int_{\lambda_0}^{\lambda_1} S_I^{ASE}(\lambda, \chi_I)\, G_{II}^{ASE}(\lambda, \chi_{II})\, G_{III}^{ASE}(\lambda, \chi_{III})\, a_I a_{II}\, d\lambda$$

wobei $G_{II}^{ASE}(\lambda, \chi_{II})$, $G_{III}^{ASE}(\lambda, \chi_{III})$ die spektralen Gewinne der zweiten und dritten Verstärkerstufe V2, V3 als Funktion der entsprechenden mittleren Inversion $\chi_{III}$ (der dritten Verstärkerstufe V3) bezeichnen. Dabei ist die Dämpfung der zweiten Verstärkerstufe mit $a_{II}$ bezeichnet. Aufgrund oder bei einer Konstanthaltung des Gesamtgewinns des optischen dreistufigen Faserverstärkers folgt die Gleichung:

$$G_I^{ASE}(\lambda, \chi_I) \cdot G_{II}^{ASE}(\lambda, \chi_{II}) \cdot G_{III}^{ASE}(\lambda, \chi_{III}) = G_0 = konst$$

Mit welcher die Beiträge, die eine Funktion der mittleren Inversion $\chi_{III}$ der dritten Verstärkerstufe V3, als Funktion einer oder beider anderen mittleren Inversionen $\chi_I$, $\chi_{II}$ ermittelt werden können. D.h. für einen optischen dreistufigen Faserverstärker werden lediglich zwei anstatt drei Inversionswerte benötigt, um die sechs Beiträge der Gesamtleistung der verstärkten spontanen Emission ASE zu ermitteln, wie folgt:

$$P_{13}^{ASE} = \int_{\lambda_0}^{\lambda_1} S_I^{ASE}(\lambda, \chi_I)\, \frac{G_0}{G_I^{ASE}(\lambda, \chi_I)}\, a_I a_{II}\, d\lambda = a_I a_{II} \cdot G_0 \cdot \tau_{13}(\chi_I)$$

Die beiden weiteren Beiträge $P_{23}^{ASE}$, $P_{33}^{ASE}$ lassen sich wie folgt errechnen:

$$P_{23}^{ASE} = \int_{\lambda_0}^{\lambda_1} S_{II}^{ASE}(\lambda, \chi_{II})\, G_{III}^{ASE}(\lambda, \chi_{III})\, a_{II}\, d\lambda$$

$$P_{33}^{ASE} = \int_{\lambda_0}^{\lambda_1} S_{III}^{ASE}(\lambda, \chi_{III})\, d\lambda$$

Bei Konstanthaltung des Gesamtgewinns des dreistufigen Faserverstärkers an dem Wert $G_0$ können ebenfalls die beiden letzten Beiträge als Funktion der beiden mittleren Inversionen $\chi_I$, $\chi_{II}$ errechnet werden, derart dass

$$P_{23}^{ASE} = a_{II}\, \tau_{23}(\chi_I, \chi_{II})$$

$$P_{33}^{ASE} = \tau_{33}(\chi_I, \chi_{II})$$

Insgesamt zur genauen Ermittlung einer Gesamtleistung $P_{ASE}3$ der verstärkten spontanen Emission ASE im dreistufigen Faserverstärker V1, V2, V3 können also anhand von mittleren Inversionen von zwei der Verstärkerstufe V1, V2, V3 sechs Parameter $\tau_{11}(\chi_I)$, $\tau_{12}(\chi_I)$, $\tau_{22}(\chi_I)$, $\tau_{13}(\chi_I)$, $\tau_{23}(\chi_I, \chi_{II})$, $\tau_{33}(\chi_I, \chi_{II})$ (als Funktion der beiden gewählten Inversionen) mittels einer geeigneten Kalibration tabelliert werden.

Im Betrieb kann je nach Eingangsleistung an einer Verstärkerstufe die gesamte ASE-Leistung am Ende des optischen Faserverstärkers durch Addition der entsprechenden Beiträge, die in den Tabellen ausgesucht werden, ermittelt werden. Diese Methode kann mittels eines DSPs (Digital Signal Processing) zur Echtzeitermittlung der gesamten ASE-Leistung implementiert werden.

Anhand der drei vorherigen Ausführungsbeispiele für einen einstufigen, einen zweistufigen und einen dreistufigen optischen Faserverstärker ist es einem Fachmann nahe liegend, weitere Ermittlungen der Gesamtleistung der ASE durch Erzeugung geeigneter Tabellen mit kalibrierten Werten $\tau_{ij}(\chi_I, \chi_{II}, etc)$, für einen N-stufigen Faserverstärker (N>3) herzuleiten.

Diese Methode kann ebenfalls für Verstärkerstufen mit zwischengeschalteten Übertragungsfasern angewendet werden. Dazu kommen lediglich zusätzliche Dämpfungsfaktoren als die bekannten vorherigen Dämpfungswerte $a_I$, $a_{II}$ vor. Daher kann man an jedem gewählten Ort oder am Ende des Übertragungssystems eine komplette und genaue Ermittlung der ASE-Leistung leicht und schnell durchführen.

Zur Durchführung des erfindungsgemässen Verfahrens kann ein Datenträger mit einem Programm verwendet werden, das in ein Kontrollmodul geladen werden kann, wobei das Kontrollmodul das vorherige Verfahren durchführt, wenn das benannte Programm ausgeführt wird. Dieser Aspekt ist sehr wichtig, da das ganze Verfahren softwaremässig gesteuert werden kann, wobei Vorrichtungskomponente oder deren Ausgangsignale des optischen Verstärkers überwacht bzw. gemessen werden.

Das Kontrollmodul kann eine oder mehrere lokale Kontrolleinheiten bei wenigstens einer der Verstärkungsstufe aufweisen. Dies ermöglicht eine genaue Ermittlung der ASE-Leistung direkt am optischen Faserverstärker. In Verbindung mit einer Leistungsregelung der Signale bzw. der Pumpsignale einer Verstärkerstufe kann eine Leistungsanpassung am optischen Verstärker selbstständig erfolgen.

Das Kontrollmodul kann ein Teil eines Netzwerkmanagements sein, insbesondere wenn eine gesamte Überwachung eines Netzwerks erwünscht ist.

Die tabellierten Werte werden am günstigsten in einem DSPbasierten Modul gespeichert (DSP= Digital Signal Processing), das vom Kontrollmodul gesteuert ist. Ein solches Modul ermöglicht einen schnellen sowie umfangreichen Zugriff auf die Werte der Tabelle sowie ihrer Verarbeitung z. B. durch weitere Addition und Multiplikation.

Im Folgenden wird die Erfindung aus einer Vorrichtungssicht betrachtet. Dafür werden zwei Ausführungsbeispiele beschrieben, in dem ein neuer einstufiger und ein neuer dreistufiger optischer Faserverstärker dargestellt werden.

**Figur 2** zeigt den **einstufigen** optischen Faserverstärker mit einer Verstärkerstufe V1 (mit Pumpquelle PUMP gepumpte Erbium-dotierte Faser EDF), an welcher am Eingang ein erstes Leistungsmessmittel $M_{IN}$ sowie mittels eines ausgangseitigen zweiten Leistungsmessmittels $M_{OUT}$ oder mittels einer vorgegebenen Gewinnregelung $G_{MONITOR}$ (z.B. wie eine AGC= Automatic Gain Control) eine Ermittlungsanordnung der mittleren Inversion zugeordnet sind. Die Gewinnregelung $G_{MONITOR}$ steuert in diesem Beispiel die Leistung der Pumpquelle PUMP, so dass eine Vorgabe in Sinne von Gewinn oder Ausgangsleistung am Ausgang der Verstärkerstufe bzw. des optischen Faserverstärkers gewährleistet wird. Anstelle der Gewinnregelung können ebenfalls die beiden Leistungsmessmittel $M_{IN}$, $M_{OUT}$ zur Anpassung eines vorgegebenen Gewinns durch eine Regelung der Pumpquelle PUMP verwendet werden. Das Gleiche gilt, wenn die Gewinnregelung $G_{MONITOR}$ und das ausgangseitige Leistungsmessmittel $M_{OUT}$ verwendet werden.

In diesem Fall werden Ausgangsignale des ersten Leistungsmessmittels $M_{IN}$ und der Ermittlungsanordnung (hier die Gewinnregelung $G_{MONITOR}$) der mittleren Inversion zu einer Tabelle TAB geführt, bei welcher verschiedene kalibrierte Werte von Leistungsbeiträgen $P_{11}^{ASE}$ einer verstärkten spontanen Emission ASE gespeichert sind. Die Beiträge liefern dabei die direkte ASE-Gesamtleistung des optischen Faserverstärkers. Die in der Tabelle kalibrierten Werte sind die in Figur 1 erwähnten Parameter $\tau_{11}(\chi_I)$ als Funktion der mittleren Inversion $X_I$. Prinzipiell ähnlich wird jedoch ein optischer Faserverstärker mit mehreren Verstärkerstufen V1, V2, V3, ... von dem mit einer Verstärkerstufe etwas abweichen, wenn er zur Durchführung des erfindungsgemässen Verfahrens geeignet sein sollte.

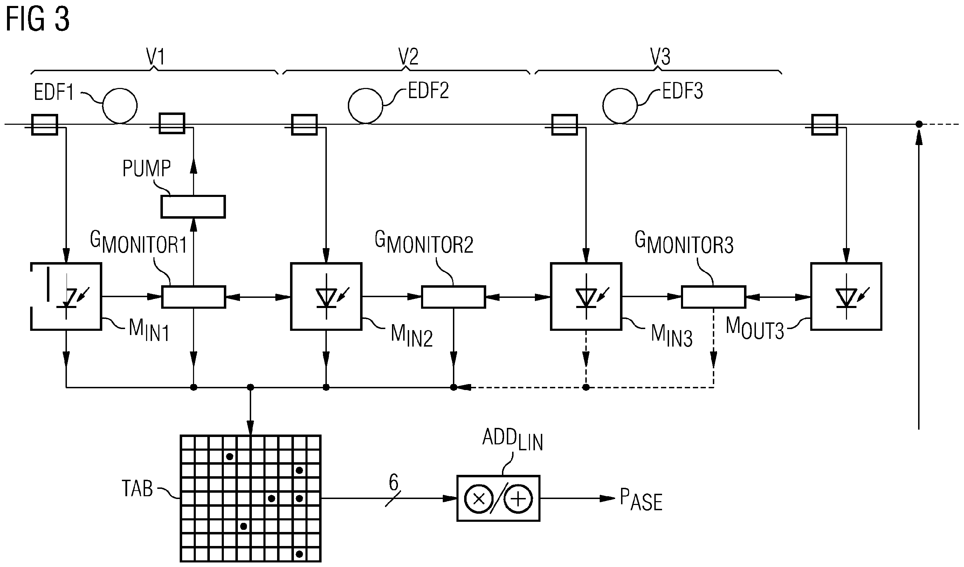

Als letztes Ausführungsbeispiel durch **Figur 3** wird der **dreistufige** optische Faserverstärker genommen, an deren Verstärkerstufen V1, V2, V3 (mit drei seriell geschalteten und gepumpten Verstärkungsfasern EDF1, EDF2, EDF3) jeweils am Eingang ein erstes Leistungsmessmittel $M_{IN1}$, $M_{IN2}$, $M_{IN3}$, ... sowie mittels eines Verstärkerstufen-ausgangseitigen zweiten Leistungsmessmittels $M_{OUT1}$, $M_{OUT2}$, $M_{OUT3}$, ... oder mittels einer vorgegebenen Gewinnregelung $G_{MONITOR1}$, $G_{MONITOR2}$, $G_{MONITOR3}$, ... eine Ermittlungsanordnung der mittleren Inversion dieser Verstärkerstufe zugeordnet sind.

Wie in Figur 2 sind Ausgangsignale jedes ersten Leistungsmessmittels $M_{IN1}$, $M_{IN2}$, $M_{IN3}$ und der Ermittlungsanordnung(en) $G_{MONITOR1}$, $G_{MONITOR2}$, $G_{MONITOR3}$ der mittleren Inversion zu der Tabelle TAB geführt. Die Tabelle TAB weist jedoch viel mehr kalibrierte Werte als in Figur 2, da eine höhere Zahl von Parametern $\tau_{11}(\chi_I)$, $\tau_{12}(\chi_I)$, $\tau_{22}(\chi_I)$, $\tau_{13}(\chi_I)$, $\tau_{23}(\chi_I,\chi_{II})$, $\tau_{33}(\chi_I,\chi_{II})$, zur Bestimmung der ASE in mehrstufigen Faserverstärkern erforderlich ist. Wie bereits bei der Beschreibung des erfindungsgemässen Verfahrens erwähnt, werden aus den verschiedenen kalibrierten Werten (=Parameter $\tau_{11}(\chi_I)$, $\tau_{12}(\chi_I)$, $\tau_{22}(\chi_I)$, $\tau_{13}(\chi_I)$, $\tau_{23}(\chi_I,\chi_{II})$, $\tau_{23}(\chi_I,\chi_{II})$) und den Dämpfungen der Elemente zwischen den Stufen die ASE-Gesamtleistungen an den Ausgängen der einzelnen Stufen berechnet. Davon sollten nur sechs Parameter die richtigen Leistungsbeiträge abliefern, jedoch müssen sie noch ggf. multipliziert (mit Dämpfungswerten $a_I$, $a_{II}$ und ggf. Konstantgewinnwerten $G_0$) und anschliessend addiert werden. Deshalb ist der Tabelle TAB ein linearer Addierer ADD$_{LIN}$ nachgeschaltet ist, dessen Addierungskomponenten zur Ermittlung einer Gesamtleistung P$_{ASE}$ der am Ausgang des optischen Verstärkers auftretenden verstärkten spontanen Emission ASE durch ausgewählte kalibrierte Werte der Tabelle TAB gebildet sind. Insbesondere wenn die tabellierten Werte ohne systembedingte Faktoren $a_I$, $a_{II}$, $G_0$, ... kalibriert wurden, ist der Multiplizierer zum Addierer ADD erforderlich, da eine neue Gewichtung vorgenommen werden muss. Der lineare Addierer ADD$_{LIN}$ kann auch zur Neukalibrierung der Werte dienen, z.B. bei einem Alterungseffekt oder bei einer Änderung der Konfiguration im optischen Faserverstärker.

**Patentansprüche**

1. Verfahren zur Leistungsermittlung einer verstärkten spontanen Emission (ASE) in einem optischen Faserverstärker für ein WDM-Signal mit einer ersten Verstärkerstufe (V1) und einer der ersten Verstärkerstufe (V1) seriell nachgeschalteten zweiten Verstärkerstufe (V2),
   **dadurch gekennzeichnet,**

   - **dass** für eine gemessene Eingangsleistung (P$_{IN}$1) eine vorgegebene Ausgangsleistung (P$_{OUT}$1) eingestellt wird und daraus eine erste mittlere Inversion ($\chi_I$) der ersten Verstärkerstufe (V1) ermittelt wird,
   - **dass** bei der zweiten Verstärkerstufe (V2) eine zweite vorgegebene Ausgangsleistung (P$_{OUT}$2) bei bekannter Ausgangsleitung der ersten Verstärkerstufe (V1) eingestellt wird, dass dabei ein Gesamtgewinn (G$_0$) über beide Verstärkerstufen (V1, V2) konstant gehalten wird, so dass die erste mittlere Inversion ($\chi_I$) und eine zweite mittlere Inversion ($\chi_{II}$) der zweiten Verstärkerstufe (V2) linear voneinander abhängen,
   - **dass** eine Gesamtleistung der verstärkten spontanen Emission (ASE) am Ausgang des zweistufigen optischen Faserverstärkers mittels zweier ASE-Beiträge ($P_{12}^{ASE}$, $P_{22}^{ASE}$) ermittelt wird, von denen ein erster ASE-Beitrag ($P_{12}^{ASE}$) von der ersten Verstärkerstufe (V1) erzeugt und dieser von der zweiten Verstärkerstufe (V2) verstärkt wird und ein zweiter ASE-Beitrag ($P_{22}^{ASE}$) von der zweiten Verstärkerstufe (V2) erzeugt wird, und die Gesamtleistung mit zwei die ASE-Beiträge ($P_{12}^{ASE}$, $P_{22}^{ASE}$) bestimmenden Parametern ($\tau_{12}(\chi_I)$, $\tau_{22}(\chi_I)$) errechnet wird, welche bei konstant gehaltenem Gesamtgewinn (G$_0$) beider Verstärkerstufen (V1, V2) nur von einer der mittleren Inversionen ($\chi_I$ ; $\chi_{II}$) einer der Verstärkerstufen (V1, V2) abhängt, und
   - **dass** mit diesen nur von einer Inversion abhängigen Parametern ($\tau_{12}(\chi_I)$, $\tau_{22}(\chi_I)$) die Gesamtleistung ($P_2^{ASE}$) der verstärkten spontanen Emission (ASE) am Ausgang der zweiten Verstärkerstufe (V2) ermittelt wird.

2. Verfahren nach Anspruch 1,
   **dadurch gekennzeichnet,**
   **dass** die ASE-Leistung am Ausgang der ersten Verstärkerstufe (V1) entspricht

$$P_{11}^{ASE} = \int_{\lambda_0}^{\lambda_1} S_I^{ASE}(\lambda, \chi_I)\, d\lambda = \tau_{11}(\chi_I),$$

dass die ASE-Beiträge am Ausgang des zweiten Verstärkers (V2) entsprechen

$$P_{12}^{ASE} = \int_{\lambda_0}^{\lambda_1} S_I^{ASE}(\lambda, \chi_I)\, G_{II}^{ASE}(\lambda, \chi_{II})\, a_I\, d\lambda = a_I \tau_{12}(\chi_I, \chi_{II}),$$

$$P_{22}^{ASE} = \int_{\lambda_0}^{\lambda_1} S_{II}^{ASE}(\lambda, \chi_{II}) \, d\lambda = \tau_{22}(\chi_{II}),$$

wobei

$S_I^{ASE}(\lambda, \chi_I)$ eine Leistungsdichte am Ausgang der ersten Verstärkerstufe (V2)ist,

$G_{II}^{ASE}(\lambda, \chi_{II})$ der Gewinn der zweiten Verstärkerstufe (V2) bei einer mittleren Inversion ($\chi_{II}$) der zweiten Verstärkerstufe ist, $a_I$ eine Dämpfung zwischen der ersten und der zweiten Verstärkerstufe und der Parameter $\tau_{12}(\chi_I, \chi_{II})$ eine Funktion der beiden mittleren Inversionen ($\chi_I$, $\chi_{II}$) bezeichnet,

$S_{II}^{ASE}(\lambda, \chi_{II})$ eine von der zweiten Verstärkerstufe (V2) generierte Leistungsdichte an deren Ausgang ist und der Parameter $\tau_{22}(\chi_{II})$ eine Funktion der mittleren Inversion ($\chi_{II}$) der zweiten Verstärkerstufe (V2) ist, und wobei

bei konstantem Gesamtgewinn ($G_0$) beider Verstärkerstufen (V1, V2) die ASE-Beiträge ($P_{12}^{ASE}$, $P_{22}^{ASE}$) nur von der mittleren Inversion ($\chi_I$ ; $\chi_{II}$) einer der beiden Verstärkerstufen (V1, V2) abhängig sind.

3. Verfahren nach Anspruch 2,
**dadurch gekennzeichnet,**

- **dass** kalibrierte Werte der drei Parameter ($\tau_{11}(\chi_I)$, $\tau_{12}(\chi_I)$, $\tau_{22}(\chi_I)$), die bei konstantem Gesamtgewinn ($G_0$) nur von einer der mittleren Inversionen ($\chi_I$ ; $\chi_{II}$) der Verstärkerstufen (V1, V2) abhängig sind, in einer Tabelle (TAB) gespeichert werden, und

- **dass** anhand der kalibrierten Werte der Parameter (($\tau_{12}(\chi_I)$, $\tau_{22}(X_I)$) die Gesamtleistung ($P_2^{ASE}$) der verstärken spontanen Emission (ASE) am Ausgang der zweiten Verstärkerstufe (V2) ermittelt wird.

4. Verfahren zur Leistungsermittlung einer verstärkten spontanen Emission (ASE) in einem optischen Faserverstärker für ein WDM-Signal mit einer ersten Verstärkerstufe (V1), einer der ersten Verstärkerstufe (V1) seriell nachgeschalteten zweiten Verstärkerstufe (V2), und einer der zweiten Verstärkerstufe (V2) seriell nachgeschalteten dritten Verstärkerstufe (V3), **dadurch gekennzeichnet,**

- **dass** bei der ersten Verstärkerstufe (V1), die eine erste mittlere Inversion ($\chi_I$) aufweist, für eine gemessene Eingangsleistung ($P_{IN}1$) eine vorgegebene Ausgangsleistung ($P_{OUT}1$) eingestellt wird,
- **dass** bei der zweiten Verstärkerstufe (V2), die eine zweite mittlere Inversion ($\chi_{II}$) aufweist, eine zweite vorgegebene Ausgangsleistung ($P_{OUT}2$) bei bekannter Ausgangsleitung der ersten Verstärkerstufen (V1) eingestellt wird,
- **dass** bei der dritten Verstärkerstufe (V3), die eine dritte mittlere Inversion ($\chi_{III}$) aufweist, eine dritte vorgegebene Ausgangsleistung ($P_{OUT}3$) bei bekannter Ausgangsleitung der zweiten Verstärkerstufe (V2) eingestellt wird,
- **dass** der Gesamtgewinn ($G_0$) über die drei Verstärkerstufen (V1, V2, V3) konstant gehalten wird,

- **dass** eine Gesamtleistung ($P_3^{ASE}$) der verstärkten spontanen Emission (ASE) am Ausgang des dreistufigen optischen Faserverstärkers mittels dreier ASE-Beiträge ($P_{13}^{ASE}$, $P_{23}^{ASE}$, $P_{33}^{ASE}$) errechnet wird, von denen der erste ASE-Beitrag ($P_{13}^{ASE}$) von der ersten Verstärkerstufe (V1) erzeugt und von den nachgeschalteten Verstärkerstufen (V2, V3) verstärkt wird, der zweite ASE-Beitrag ($P_{23}^{ASE}$) von der zweiten Verstärkerstufe (V2) erzeugt und von der dritten Verstärkerstufe (V3) verstärkt wird, ein dritter ASE-Beitrag ($P_{33}^{ASE}$) von der dritten Verstärkerstufe (V3) erzeugt wird,

- **dass** die drei ASE-Beiträge ($P_{13}^{ASE}$, $P_{23}^{ASE}$, $P_{33}^{ASE}$) mit drei Parametern ($\tau_{13}(\chi_I)$, $\tau_{23}(\chi_I, \chi_{II})$, $\tau_{33}(\chi_I, \chi_{II})$) errechnet werden, welche bei konstant gehaltenem Gesamtgewinn ($G_0$) der Verstärkerstufen (V1, V2, V3) nur von zwei der mittleren Inversionen ($\chi_I$, $\chi_{II}$) von zwei der Verstärkerstufen (V1, V2) abhängig sind, und

- **dass** mit diesen Parametern ($\tau_{13}(\chi_I)$, $\tau_{23}(\chi_I, \chi_{II})$, $\tau_{33}(\chi_I, \chi_{II})$) die Gesamtleistung ($P_3^{ASE}$) der verstärkten spontanen Emission (ASE) am Ausgang des Faserverstärkers ermittelt wird.

**5.** Verfahren nach Anspruch 4,
**dadurch gekennzeichnet,**
**dass** die drei ASE-Beiträge bei konstantem Gesamtgewinn ($G_0$) am Ausgang des dritten Verstärkers (V3)

$$P_{13}^{ASE} = \int_{\lambda_0}^{\lambda_1} S_I^{ASE}(\lambda, \chi_I) \frac{G_0}{G_I^{ASE}(\lambda, \chi_I)} a_I a_{II} \, d\lambda = a_I a_{II} \cdot G_0 \cdot \tau_{13}(\chi_I)$$

$$P_{23}^{ASE} = \int_{\lambda_0}^{\lambda_1} S_{II}^{ASE}(\lambda, \chi_{II}) \, G_{III}^{ASE}(\lambda, \chi_{III}) a_{II} \, d\lambda = a_{II} \, \tau_{23}(\chi_I, \chi_{II})$$

$$P_{33}^{ASE} = \int_{\lambda_0}^{\lambda_1} S_{III}^{ASE}(\lambda, \chi_{III}) \, d\lambda = \tau_{33}(\chi_I, \chi_{II})$$

entsprechen, wobei
$S_I^{ASE}(\lambda, \chi_I)$, $S_{II}^{ASE}(\lambda, \chi_{II})$, $S_{III}^{ASE}(\lambda, \chi_{III})$ die in den jeweiligen Verstärkerstufen (V1, V2, V3) erzeugten spektralen Leistungsdichten an deren Ausgängen sind, $G_{III}^{ASE}(\lambda, \chi_{III})$ der spektrale Gewinn der dritten Verstärkerstufe (V3) ist,
$G_0$ die Gesamtverstärkung der drei Verstärkerstufen (V1, V2, V3) ist, und
$a_I$, $a_{II}$ Dämpfungen zwischen der ersten beziehungsweise zweiten Verstärkerstufe (V1, V2) und der jeweils nachfolgenden Verstärkerstufe sind.

**6.** Verfahren nach einem der Ansprüche 4 oder 5,
**dadurch gekennzeichnet,**

- **dass** zusätzlich kalibrierte Werte der drei Parameter ($\tau_{13}(\chi_I)$, $\tau_{23}(\chi_I, \chi_{II})$, $\tau_{33}(\chi_I, \chi_{II})$) in einer Tabelle gespeichert werden, die bei konstantem Gesamtgesamtgewinn ($G_0$) von den mittleren Inversionen ($\chi_I$; $\chi_{II}$) nur zweier Verstärkerstufen (V1, V2) abhängig sind, und
- **dass** anhand von kalibrierten Werten der drei Parameter ($\tau_{13}(\chi_I)$, $\tau_{23}(\chi_I, \chi_{II})$, $\tau_{33}(\chi_I, \chi_{II})$) die Gesamtleistung $\left(P_3^{ASE}\right)$ der verstärkten spontanen Emission (ASE) am Ausgang des Faserverstärkers ermittelt wird.

**7.** Verfahren nach einem der vorhergehenden Ansprüche,
**dadurch gekennzeichnet,**
**dass** die Berechnung der Gesamtleistungen $\left(P_2^{ASE}; P_3^{ASE}\right)$ der verstärken spontanen Emission (ASE) an den Ausgängen der Verstärkerstufen (V2, V3) unter Berücksichtigung von Dämpfungswerten ($a_I$, $a_{II}$) erfolgt.

**8.** Verfahren nach einem der Ansprüche 4 bis 7,
**dadurch gekennzeichnet,**
**dass** weitere Leistungsbeiträge der ASE ($P_{ij}^{ASE}$ mit i = 1, 2, 3, 4, 5, ... und j = 4, 5, ...) bei einem optischen Faserverstärker mit mehr als drei Verstärkerstufen zur Ermittlung der Gesamtleistungen der verstärken spontanen Emission (ASE) an weiteren Verstärkerstufen (V_j) des optischen Faserverstärker ermittelt und zu Gesamtleistungswerten an den Ausgängen der weiteren Verstärkerstufen addiert werden.

**9.** Verfahren nach einem der vorhergehenden Ansprüche,
**dadurch gekennzeichnet,**
**dass** alle Leistungsbeiträge $\left(P_{ij}^{ASE}\right)$ für die Gesamtleistungen der verstärken spontanen Emission (ASE) mittels tabellierter Werte ($\tau_{kl}(\chi_I, \chi_{II}, \chi_{III}, ...)$) ermittelt werden, die in der Tabelle (TAB) gespeichert wurden.

**10.** Verfahren nach einem der vorhergehenden Ansprüche,
**dadurch gekennzeichnet,**

**dass** Proportionalitätsfaktoren zwischen ASE-Beiträgen und tabellierten Werten durch Systemeigenschaften wie Dämpfungswerte oder Gesamtgewinnwerte ermittelt werden.

11. Verfahren nach einem der vorhergehenden Ansprüche,
   **dadurch gekennzeichnet,**
   **dass** die tabellierten Werte regelmässig neu kalibriert werden, so dass Alterungs- oder Erweiterungseffekte des optischen Faserverstärkers berücksichtigt werden.

12. Optischer Faserverstärker zur Durchführung des Verfahrens nach einem der Ansprüche 1 bis 3 mit zwei Verstärkerstufen (V1, V2), wobei an der ersten Verstärkerstufe (V1) am Eingang ein erstes Leistungsmessmittel ($M_{IN1}$), am Ausgang der zweiten Verstärkerstufe (V2) ein zweites Leistungsmessmittel ($M_{OUT2}$) und zwischen der ersten und der zweiten Verstärkerstufe (V1, V2) ein Leistungsmessmittel ($M_{IN2}$), angeordnet ist, mit einer Gewinnregelung ($G_{MONITOR1}G_{MONITOR2}$,), der jeweils eine Ermittlungsanordnung der mittleren Inversion diese Verstärkerstufen (V1, V2 zugeordnet ist,
   **dadurch gekennzeichnet,**

   - **dass** der Faserverstärker Mittel zur Berechnung der ASE-Beiträge $\left( P_{11}^{ASE} ; \ P_{12}^{ASE}, \ P_{22}^{ASE} \right)$ der verstärken spontanen Emission (ASE) mit systembedingten Faktoren ($a_I$, $a_{II}$, $G_0$, ...) oder der hierzu proportionalen Parameter ($\tau_1(\chi_I)$; $\tau_{12}(\chi_I)$, $\tau_{22}(\chi_I)$) als Funktion der mittleren Inversionen ($\chi_I, \chi_{II}$) einer der beiden Verstärkerstufen (V1, V2) aufweist,
   - **dass** der Faserverstärker eine Tabelle (TAB) aufweist, in die kalibrierte Werte dieser ASE-Beiträge $\left( P_{11}^{ASE} ; \ P_{12}^{ASE}, \ P_{22}^{ASE} \right)$ oder die Parameter ($\tau_1(\chi_I)$; $\tau_{12}(\chi_I)$, $\tau_{22}(\chi_I)$) als Funktion von mittleren Inversionen ($\chi_I$, $\chi_{II}$) einer der beiden Verstärkerstufen (V1, V2) gespeichert werden, und
   - **dass** der Tabelle (TAB) eine Recheneinrichtung ($ADD_{LIN}$) zugeordnet ist zur Ermittlung der Gesamtleistungen $\left( P_2^{ASE} \right)$ der verstärkten spontanen Emission (ASE) an den Ausgängen der Verstärkerstufen (V1, V2).

13. Optischer Faserverstärker zur Durchführung des Verfahrens nach einem der Ansprüche 4 bis 11 mit drei Verstärkerstufen (V1, V2, V3,), wobei an der ersten Verstärkerstufe (V1) am Eingang ein erstes Leistungsmessmittel ($M_{IN1}$), am Ausgang der dritten Verstärkerstufe (V3) ein zweites Leistungsmessmittel ($M_{OUT3}$) und zwischen den Verstärkerstufen (V1, V2, V3) jeweils ein Leistungsmessmittel ($M_{IN2}$, $M_{IN3}$) angeordnet ist, mit einer Gewinnregelung ($G_{MONITOR1}$, $G_{MONITOR2}$, $G_{MONITOR3}$), der jeweils eine Ermittlungsanordnung der mittleren Inversion dieser Verstärkerstufen (V1, V2, V3) zugeordnet ist,
   **dadurch gekennzeichnet,**

   - **dass** der Faserverstärker Mittel zur Berechnung der ASE-Beiträge $\left( P_{11}^{ASE} ; \ P_{12}^{ASE}, \ P_{22}^{ASE} ; \ P_{13}^{ASE}, \ P_{23}^{ASE}, \ P_{33}^{ASE} \right)$ der verstärken spontanen Emission (ASE) mit systembedingten Faktoren ($a_I$, $a_{II}$, $G_0$, ...) oder der hierzu proportionalen Parameter ($\tau_1(X_I)$; $\tau_{12}(\chi_I, \chi_{II})$, $\tau_{22}(X_I)$; $\tau_{13}(\chi_I)$, $\tau_{23}(\chi_I, \chi_{II})$, $\tau_{33}(X_I, X_{II})$) als Funktion der mittleren Inversionen ($\chi_I, \chi_{II}$, ...) von zwei der drei Verstärkerstufen (V1, V2, V3) aufweist,
   - **dass** der Faserverstärker eine Tabelle (TAB) aufweist, in die kalibrierte Werte dieser ASE-Beiträge $\left( P_{11}^{ASE} ; \ P_{12}^{ASE}, \ P_{22}^{ASE} ; \ P_{13}^{ASE}, \ P_{23}^{ASE}, \ P_{33}^{ASE} \right)$ oder die Parameter ($\tau_1(\chi_I)$ ;

   $\tau_{12}(\chi_I, \chi_{II})$, $\tau_{22}(\chi_{II})$; $\tau_{13}(\chi_I)$, $\tau_{23}(\chi_I, \chi_{II})$, $\tau_{33}(\chi_I, \chi_{II})$) als Funktion von mittleren Inversionen ($\chi_I$, $\chi_{II}$) von zwei der drei Verstärkerstufen (V1, V2, V3) gespeichert werden, und
   - dass der Tabelle (TAB) eine Recheneinrichtung ($ADD_{LIN}$) zugeordnet ist zur Ermittlung der Gesamtleistungen $\left( P_2^{ASE}, \ P_3^{ASE} \right.$ der verstärkten spontanen Emission (ASE) an den Ausgängen der Verstärkerstufen (V1, V2, V3).

14. Optischer Faserverstärker nach Anspruch 12 oder 13,
   **dadurch gekennzeichnet,**
   **dass** die Recheneinheit einen linearen Addierer und/oder einen Multiplizierer aufweist, der, wenn die tabellierten Werte ohne systembedingte Faktoren wie Dämpfungswerte oder konstante Gewinnwerte ($a_I$, $a_{II}$, $G_0$, ...) kalibriert wurden, die tabellierte Werte aus der Tabelle (TAB) mit systembedingten Faktoren wichtet.

15. Optischer Faserverstärker nach einem der Ansprüche 12 bis 14,

**dadurch gekennzeichnet,**
**dass** die Verstärkerstufen (V1, V2, V3, ...) entsprechend den an ihren Ausgängen ermittelten ASE-Leistungen $(P_1^{ASE}, P_2^{ASE}, P_3^{ASE}, ...)$ eingestellt werden.

**Claims**

1. A method for determining the power of an amplified spontaneous emission (ASE) in an optical fibre amplifier for a WDM signal, having a first amplifier stage (V1) and a second amplifier stage (V2) connected downstream in series of the first amplifier stage (V1), **characterized**

   - **in that** a predetermined output power ($P_{OUT}1$) is set for a measured input power ($P_{IN}1$) and a first average inversion ($\chi_I$) of the first amplifier stage (V1) is determined therefrom,
   - **in that** a second predetermined output power ($P_{OUT}2$) is set in the second amplifier stage (V2) for a known output power of the first amplifier stage (V1), in that a total gain ($G_0$) over both amplifier stages (V1, V2) is kept constant in the process, so that the first average inversion ($\chi_I$) and a second average inversion ($\chi_{II}$) of the second amplifier stage (V2) depend on one another linearly,
   - **in that** a total power of the amplified spontaneous emission (ASE) at the output of the two-stage optical fibre amplifier is determined by means of two ASE contributions $(P_{12}^{ASE}, P_{22}^{ASE})$, of which a first ASE contribution $(P_{12}^{ASE})$ is generated by the first amplifier stage (V1) and this is amplified by the second amplifier stage (V2) and a second ASE contribution $(P_{22}^{ASE})$ is generated by the second amplifier stage (V2), and the total power is calculated using two parameters ($\tau_{12}(\chi_I)$, $\tau_{23}(\chi_I)$) determining the ASE contributions $(P_{12}^{ASE}, P_{22}^{ASE})$, which, for a total gain (Go) which is kept constant for both amplifier stages (V1, V2), only depends on one of the average inversions ($\chi_I$ ; $\chi_{II}$) of one of the amplifier stages (V1, V2), and
   - **in that** the total power $(P_2^{ASE})$ of the amplified spontaneous emission (ASE) at the output of the second amplifier stage (V2) is determined using these parameters which are dependent only on one inversion ($\tau_{12}(\chi_I)$, $\tau_{22}(\chi_{II})$).

2. The method according to Claim 1,
   **characterized**
   **in that** the ASE power at the output of the first amplifier stage (V1) corresponds to

$$P_{11}^{ASE} = \int_{\lambda_0}^{\lambda_1} S_I^{ASE}(\lambda, \chi_I)\, d\lambda = \tau_{11}(\chi_I),$$

in that the ASE contributions at the output of the second amplifier (V2) correspond to

$$P_{12}^{ASE} = \int_{\lambda_0}^{\lambda_1} S_I^{ASE}(\lambda, \chi_I)\, G_{II}^{ASE}(\lambda, \chi_{II})\, a_I\, d\lambda = a_I \tau_{12}(\chi_I, \chi_{II}),$$

$$P_{22}^{ASE} = \int_{\lambda_0}^{\lambda_1} S_{II}^{ASE}(\lambda, \chi_{II})\, d\lambda = \tau_{22}(\chi_{II}),$$

wherein

$S_I^{ASE}(\lambda, \chi_I)$ is a power density at the output of the first amplifier stage (V2),

$G_{II}^{ASE}(\lambda, \chi_{II})$ is the gain of the second amplifier stage (V2) for an average inversions ($\chi_{II}$) of the second amplifier stage, $a_I$ is a damping between the first and the second amplifier stage and the parameter $\tau_{12}(\chi_I, \chi_{II})$ designates a function of the two average inversions ($\chi_I$, $\chi_{II}$),

$S_{II}^{ASE}(\lambda, \chi_{II})$ is a power density generated by the second amplifier stage (V2) at the output thereof and the parameter $\tau_{22}(\chi_{II})$ is a function of the average inversion ($\chi_{II}$) of the second amplifier stage (V2), and wherein for a constant total gain ($G_0$) of both amplifier stages (V1, V2), the ASE contributions ($P_{12}^{ASE}$, $P_{22}^{ASE}$) only depend on the average inversion ($\chi_I$ ; $\chi_{II}$) of one of the two amplifier stages (V1, V2).

3. The method according to Claim 2, **characterized**

    - **in that** calibrated values of the three parameters ($\tau_{11}(\chi_I)$, ($\tau_{12}(\chi_I)$), ($\tau_{22}(\chi_I)$)), which, for a constant total gain ($G_o$), only depend on one of the average inversions ($\chi_I$ ; $\chi_{II}$) of the amplifier stages (V1, V2), are stored in a table (TAB), and

    - **in that** the total power ($P_2^{ASE}$) of the amplified spontaneous emission (ASE) at the output of the second amplifier stage (V2) is determined on the basis of the calibrated values of the parameters (($\tau_{12}(\chi_I)$, $\tau_{22}(\chi_I)$)).

4. A method for determining the power of an amplified spontaneous emission (ASE) in an optical fibre amplifier for a WDM signal, having a first amplifier stage (V1), a second amplifier stage (V2) connected downstream in series of the first amplifier stage (V1) and a third amplifier stage (V3) connected downstream in series of the second amplifier stage (V2), **characterized**

    - **in that** in the first amplifier stage (V1), which has a first average inversion ($\chi_I$), a predetermined output power ($P_{OUT}1$) is set for a measured input power ($P_{IN}1$),
    - **in that** in the second amplifier stage (V2), which has a second average inversion ($\chi_{II}$), a second predetermined output power ($P_{OUT}2$) is set for a known output power of the first amplifier stage (V1),
    - **in that** in the third amplifier stage (V3), which has a third average inversion ($\chi_{III}$), a third predetermined output power ($P_{OUT}3$) is set for a known output power of the second amplifier stage (V2),
    - **in that** the total gain ($G_0$) is kept constant over the three amplifier stages (V1, V2, V3),
    - **in that** a total power ($P_3^{ASE}$) of the amplified spontaneous emission (ASE) at the output of the three-stage optical fibre amplifier is calculated by means of three ASE contributions ($P_{13}^{ASE}, P_{23}^{ASE}, P_{33}^{ASE}$), of which the first ASE contribution ($P_{13}^{ASE}$) is generated by the first amplifier stage (V1) and is amplified by the amplifier stages (V2, V3) connected downstream, the second ASE contribution ($P_{23}^{ASE}$) is generated by the second amplifier stage (V2) and amplified by the third amplifier stage (V3), a third ASE contribution ($P_{33}^{ASE}$) is generated by the third amplifier stage (V3),

    - **in that** the three ASE contributions ($P_{13}^{ASE}, P_{23}^{ASE}, P_{33}^{ASE}$) are calculated using three parameters ($\tau_{13}(\chi_I)$, $\tau_{21}(\chi_I,\chi_{II})$, $\tau_{33}(\chi_I,\chi_{II})$), which, for a total gain ($G_o$) which is kept constant for the amplifier stages (V1, V2, V3), only depend on two of the average inversions ($\chi_I$, $\chi_{II}$) from two of the amplifier stages (V1, V2), and

    - **in that** the total power ($P_3^{ASE}$) of the amplified spontaneous emission (ASE) at the output of the fibre amplifier is determined using these parameters ($\tau_{11}(\chi_I)$, $\tau_{21}(\chi_I,\chi_{II})$, $\tau_{11}(\chi_I,\chi_{II})$).

5. The method according to Claim 4, **characterized**
**in that** the three ASE contributions for a constant total gain ($G_0$) at the output of the third amplifier (V3) correspond to

$$P_{13}^{ASE} = \int_{\lambda_1}^{\lambda_2} S_I^{ASE}(\lambda, \chi_I) \frac{G_0}{G_I^{ASE}(\lambda, \chi_I)} a_I a_{II} \, d\lambda = a_I a_{II} \cdot G_0 \cdot \tau_{13}(\chi_I)$$

$$P_{23}^{ASE} = \int_{\lambda_1}^{\lambda_2} S_{II}^{ASE}(\lambda, \chi_{II}) \; G_{III}^{ASE}(\lambda, \chi_{III}) a_{II} \, d\lambda = a_{II} \, \tau_{23}(\chi_I, \chi_{II})$$

$$P_{13}^{ASE} = \int^{\lambda_2}_{\lambda_1} S_{III}^{ASE}\left(\lambda, \chi_{III}\right)\ d\lambda = \tau_{33}\left(\chi_I, \chi_{II}\right),$$

wherein

$S_{I}^{ASE}\left(\lambda, \chi_{I}\right)$, $S_{II}^{ASE}\left(\lambda, \chi_{II}\right)$, $S_{III}^{ASE}\left(\lambda, \chi_{III}\right)$ are the spectral power densities generated in the respective amplifier stages (V1, V2, V3) at the outputs thereof,

$G_{III}^{ASE}\left(\lambda, \chi_{III}\right)$ is the spectral gain of the third amplifier stage (V3),

$G_o$ is the total amplification of the three amplifier stages (V1, V2, V3), and

$a_I$, $a_{II}$ are dampings between the first or second amplifier stage (V1, V2) and the respectively following amplifier stage.

6. The method according to one of Claims 4 or 5,
   **characterized**

   - **in that** additionally calibrated values of the three parameters ($\tau_{13}(\chi_I)$, $\tau_{23}(\chi_I,\chi_{II})$, ($\tau_{33}(\chi_I,\chi_{II})$)) are stored in a table, which, for a constant total gain ($G_o$) of the average inversions ($\chi_I$ ; $\chi_{II}$), only depend on two amplifier stages (V1, V2), and

   - **in that** the total power ($P_3^{ASE}$) of the amplified spontaneous emission (ASE) at the output of the fibre amplifier is determined on the basis of calibrated values of the three parameters ($\tau_{13}(\chi_I)$, $\tau_{23}(\chi_I,\chi_{II})$, $\tau_{33}(\chi_I,\chi_{II})$).

7. The method according to one of the preceding claims,
   **characterized**

   **in that** the total powers $\left(P_2^{ASE}\ ;\ P_3^{ASE}\right)$ of the amplified spontaneous emission (ASE) at the outputs of the amplifier stages (V2, V3) are calculated taking account of damping values ($a_I$, $a_{II}$).

8. The method according to one of Claims 4 to 7,
   **characterized**

   **in that** further power contributions of the ASE ( $P_{ij}^{ASE}$ where i = 1, 2, 3, 4, 5, ... and j = 4, 5, ...) are determined in an optical fibre amplifier with more than three amplifier stages for determining the total powers of the amplified spontaneous emissions (ASE) at further amplifier stages ($V_j$) of the optical fibre amplifier and added to form total power values at the outputs of the further amplifier stages.

9. The method according to one of the preceding claims,

   **characterized in that** all power contributions $\left(P_{ij}^{ASE}\right)$ for the total powers of the amplified spontaneous emission (ASE) are determined by means of tabled values ($\tau_{11}$ ($\chi_I$, $\chi_{II}$, $\chi_{III}$,...)), which had been stored in the table (TAB).

10. The method according to one of the preceding claims,
    **characterized in that** proportionality factors between ASE contributions and tabled values are determined by system properties such as damping values or total-gain values.

11. The method according to one of the preceding claims,
    **characterized in that** the tabled values are regularly recalibrated, so that ageing or expansion effects of the optical fibre amplifier are taken into account.

12. An optical fibre amplifier for carrying out the method according to one of Claims 1 to 3 with two amplifier stages (V1, V2), a first power measuring means ($M_{IN1}$) being arranged at the first amplifier stage (V1) at the input, a second power measuring means ($M_{OUT2}$) being arranged at the output of the second amplifier stage (V2) and a power measuring means ($M_{IN2}$) being arranged between the first and the second amplifier stages (V1, V2), having a gain regulation ($G_{MONITOR1}$, $G_{MONITOR2}$), to which a determining arrangement of the average inversion of these amplifier stages (V1, V2) is assigned in each case, **characterized**

    - **in that** the fibre amplifier has means for calculating the ASE contributions $\left(P_{11}^{ASE}\ ;\ P_{12}^{ASE},P_{22}^{ASE}\right)$ of the amplified spontaneous emission (ASE) with factors determined by the system ($a_I$, $a_{II}$, $G_0$, ...) or the parameters

proportional thereto ($\tau_1(\chi_I)$; $\tau_{12}(\chi_I)$, $\tau_{22}(\chi_I)$) as a function of the average inversions ($\chi_I$, $\chi_{II}$) of one of the two amplifier stages (V1, V2),

- **in that** the fibre amplifier has a table (TAB), in which the calibrated values of these ASE contributions ($P_{11}^{ASE}$; $P_{12}^{ASE}$, $P_{22}^{ASE}$) or the parameters ($\tau_1(\chi_I)$; $\tau_{12}(\chi_I)$, $\tau_{22}(\chi_I)$) are stored as a function of average inversions ($\chi_I$, $\chi_{II}$) of one of the two amplifier stages (V1, V2), and

- **in that** a computing device (ADD$_{LIN}$) is assigned to the table (TAB) for determining the total powers ($P_2^{ASE}$) of the amplified spontaneous emission (ASE) at the outputs of the amplifier stages (V1, V2).

13. An optical fibre amplifier for carrying out the method according to one of Claims 4 to 11 with three amplifier stages (V1, V2, V3), a first power measuring means (M$_{IN1}$) being arranged at the first amplifier stage (V1) at the input, a second power measuring means (M$_{OUT3}$) being arranged at the output of the third amplifier stage (V3) and one power measuring means (M$_{IN2}$, M$_{IN3}$) in each case being arranged between the amplifier stages (V1, V2, V3), having a gain regulation (G$_{MONITOR1}$, G$_{MONITOR2}$, G$_{MONITOR3}$), to which a determining arrangement of the average inversion of these amplifier stages (V1, V2, V3) is assigned in each case,
**characterized**

- **in that** the fibre amplifier has means for calculating the ASE contributions ($P_{11}^{ASE}$; $P_{12}^{ASE}$, $P_{22}^{ASE}$; $P_{13}^{ASE}$, $P_{23}^{ASE}$, $P_{33}^{ASE}$) of the amplified spontaneous emission (ASE) with factors determined by the system ($a_I$, $a_{II}$, $G_0$, ...) or the parameters proportional thereto ($\tau_1(\chi_I)$; $\tau_{12}(\chi_I,\chi_{II})$, ($\tau_{22}(\chi_{II})$; ($\tau_{13}(\chi_I)$, ($\tau_{23}(\chi_I,\chi_{II})$, ($\tau_{33}(\chi_I,\chi_{II})$)) as a function of the average inversions ($\chi_I,\chi_{II}$, ...) of two of the three amplifier stages (V1, V2, V3),

- **in that** the fibre amplifier has a table (TAB), in which the calibrated values of these ASE contributions ($P_{11}^{ASE}$; $P_{12}^{ASE}$, $P_{22}^{ASE}$; $P_{13}^{ASE}$, $P_{23}^{ASE}$, $P_{33}^{ASE}$) or the parameters ($\tau_1(\chi_I)$; $\tau_{12}(\chi_I,\chi_{II})$, $\tau_{22}(\chi_{II})$; $\tau_{13}(\chi_I)$, $\tau_{21}(\chi_I,\chi_{II})$, $\tau_{33}(\chi_I,\chi_{II})$) are stored as a function of average inversions ($\chi_I$, $\chi_{II}$) of two of the three amplifier stages (V1, V2, V3), and

- **in that** a computing device (ADD$_{LIN}$) is assigned to the table (TAB) for determining the total powers ($P_2^{ASE}$; $P_3^{ASE}$) of the amplified spontaneous emission (ASE) at the outputs of the amplifier stages (V1, V2, V3).

14. The optical fibre amplifier according to Claim 12 or 13,
**characterized in that** the computing unit has a linear adder and/or a multiplier, which, if the tabled values have been calibrated without factors determined by the system such as damping values or constant gain values ($a_I$, $a_{II}$, $G_0$, ...), weights the tabled values from the table (TAB) with factors determined by the system.

15. The optical fibre amplifier according to one of Claims 12 to 14,
**characterized**

in that the amplifier stages (V1, V2, V3, ...) are set according to the ASE powers ($P_1^{ASE}$, $P_2^{ASE}$, $P_3^{ASE}$, ...) determined at the outputs thereof.


**Revendications**

1. Procédé de détermination de la puissance d'une émission spontanée amplifiée (ASE) dans un amplificateur optique à fibre pour un signal WDM avec un premier étage amplificateur (V1) et un deuxième étage amplificateur (V2) monté en aval et en série avec le premier étage amplificateur (V1),
**caractérisé en ce que**

- pour une puissance d'entrée (P$_{IN}$1) mesurée, une puissance de sortie (P$_{OUT}$1) spécifiée est réglée et une première inversion moyenne ($\chi_1$) du premier étage amplificateur (V1) est déterminée à partir de cela,
- pour le deuxième étage amplificateur (V2), une deuxième puissance de sortie (P$_{OUT}$2) spécifiée est réglée pour une puissance de sortie connue du premier étage amplificateur (V1), **en ce qu'**en l'occurrence un gain total (G$_0$) est maintenu constant par le biais des deux étages amplificateurs (V1, V2) de telle sorte que la première inversion moyenne ($\chi_I$) et une deuxième inversion moyenne ($\chi_{II}$) du deuxième étage amplificateur (V2) dépendent linéairement l'une de l'autre,

- une puissance totale de l'émission spontanée amplifiée (ASE) à la sortie de l'amplificateur optique à fibre à deux étages est déterminée au moyen de deux contributions ASE ($P_{12}^{ASE}$, $P_{22}^{ASE}$), dont une première contribution ASE ($P_{12}^{ASE}$) est produite par le premier étage amplificateur (V1) et celle-ci est amplifiée par le deuxième étage amplificateur (V2), et une deuxième contribution ASE ($P_{22}^{ASE}$) est produite par le deuxième étage amplificateur (V2), et la puissance totale est calculée avec deux paramètres ($\tau_{13}(\chi_I)$, $\tau_{22}(\chi_I)$) définissant les contributions ASE ($P_{12}^{ASE}$, $P_{22}^{ASE}$), et cette puissance totale ne dépend, pour un gain total ($G_0$) maintenu constant des deux étages amplificateurs (V1, V2), que de l'une des inversions moyennes ($\chi_I$; $\chi_{II}$) de l'un des étages amplificateurs (V1, V2), et

- avec ces deux paramètres ($\tau_{12}(\chi_I)$, $\tau_{22}(\chi_I)$) ne dépendant que d'une inversion, la puissance totale ($P_2^{ASE}$) de l'émission spontanée amplifiée (ASE) à la sortie du deuxième étage amplificateur (V2) est déterminée.

2. Procédé selon la revendication 1, **caractérisé en ce que** la puissance ASE à la sortie du premier étage amplificateur (V1) correspond à

$$P_{11}^{\wedge SE} = \int_{\lambda_0}^{\lambda_1} S_I^{ASE}(\lambda, \chi_I)\, d\lambda = \tau_{11}(\chi_I),$$

les contributions ASE à la sortie du deuxième étage amplificateur (V2) correspondent à

$$P_{12}^{ASE} = \int_{\lambda_0}^{\lambda_1} S_I^{ASE}(\lambda, \chi_I)\, G_{II}^{ASE}(\lambda, \chi_{II})\, a_I\, d\lambda = a_I \tau_{12}(\chi_I, \chi_{II}),$$

$$P_{22}^{\wedge SE} = \int_{\lambda_0}^{\lambda_1} S_{II}^{ASE}(\lambda, \chi_{II})\, d\lambda = \tau_{22}(\chi_{II}),$$

$S_I^{ASE}(\lambda, \chi_I)$ étant une densité de puissance à la sortie du premier étage amplificateur (V2),

$G_{II}^{ASE}(\lambda, \chi_{II})$ étant le gain du deuxième étage amplificateur (V2) pour une deuxième inversion moyenne ($\chi_{II}$) du deuxième étage amplificateur, $\alpha_I$ étant un amortissement entre le premier et le deuxième étage amplificateur, et le paramètre $\tau_{12}(\chi_I, \chi_{II})$ désignant une fonction des deux inversions moyennes ($\chi_I, \chi_{II}$),

$S_{II}^{ASE}(\lambda, \chi_{II})$ étant une densité de puissance générée par le deuxième étage amplificateur (V2) à sa sortie, et le paramètre $\tau_{22}(\chi_{II})$ étant une fonction de l'inversion moyenne ($\chi_{II}$) du deuxième étage amplificateur (V2)et,

pour un gain total ($G_0$) constant des deux étages amplificateurs (V1, V2), les contributions ASE ($P_{12}^{ASE}$, $P_{22}^{ASE}$) ne dépendant que de l'inversion moyenne ($\chi_I, \chi_{II}$) de l'un des deux étages amplificateurs (V1, V2).

3. Procédé selon la revendication 2,
   **caractérisé en ce que**

   - des valeurs étalonnées des trois paramètres ($\tau_{11}(\chi_I)$, $\tau_{12}(\chi_I)$, $\tau_{12}(\chi_I)$) qui, pour un gain total ($G_0$) constant, ne dépendent que de l'une des inversions moyennes ($\chi_I$; ($\chi_{II}$) des étages amplificateurs (V1, V2), sont enregistrées dans un tableau (TAB), et
   - à l'aide des valeurs étalonnées des paramètres (($\tau_{12}(\chi_I)$, $\tau_{22}(\chi_I)$), la puissance totale ($P_2^{\wedge SE}$) de l'émission spontanée amplifiée (ASE) à la sortie du deuxième étage amplificateur (V2) est calculée.

4. Procédé de détermination de la puissance d'une émission spontanée amplifiée (ASE) dans un amplificateur optique à fibre pour un signal WDM avec un premier étage amplificateur (V1), un deuxième étage amplificateur (V2) monté en aval et en série avec le premier étage amplificateur (V1), **caractérisé en ce que**

   - pour le premier étage amplificateur (V1) qui présente une première inversion moyenne ($\chi_I$), une puissance de sortie ($P_{OUT}1$) spécifiée est réglée pour une puissance d'entrée ($P_{IN}1$) mesurée,

- pour le deuxième étage amplificateur ($V_2$) qui présente une deuxième inversion moyenne ($\chi_{II}$), une deuxième puissance de sortie ($P_{OUT}2$) spécifiée est réglée pour une puissance de sortie connue des premiers étages amplificateurs (V1),

- pour le troisième étage amplificateur (V3) qui présente une troisième inversion moyenne ($\chi_{III}$), une troisième puissance de sortie ($P_{OUT}3$) spécifiée est réglée pour une puissance de sortie connue du deuxième étage amplificateur (V2),

- le gain total ($G_0$) est maintenu constant par le biais des trois étages amplificateurs (V1, V2, V3),

- une puissance totale ($P_3^{ASE}$) de l'émission spontanée amplifiée (ASE) à la sortie de l'amplificateur optique à fibre à trois étages est calculée au moyen de trois contributions $\mathrm{ASE}$ $(P_{13}^{ASE}, P_{23}^{ASE}, P_{33}^{ASE})$, dont la première contribution $\mathrm{ASE}$ $(P_{13}^{ASE})$ est produite par le premier étage amplificateur (V1) et est amplifiée par les étages amplificateurs (V2, V3) montés en aval, la deuxième contribution $\mathrm{ASE}$ $(P_{23}^{ASE})$ est produite par le deuxième étage amplificateur (V2) et est amplifiée par le troisième étage amplificateur (V3), une troisième contribution $\mathrm{ASE}$ $(P_{33}^{ASE})$ est produite par le troisième étage amplificateur (V3),

- les trois contributions $\mathrm{ASE}$ $(P_{13}^{ASE}, P_{23}^{ASE}, P_{33}^{ASE})$ sont calculées avec trois paramètres ($\tau_{13}(\chi_I)$, $\tau_{23}(\chi_I, \chi_{II})$, $\tau_{33}(\chi_I, \chi_{II})$) qui, pour un gain total ($G_0$) des étages amplificateurs (V1, V2, V3) maintenu constant, ne dépendent que de deux des inversions moyennes ($\chi_I$, $\chi_{II}$) de deux des étages amplificateurs (V1, V2), et

- avec ces paramètres ($\tau_{13}(\chi_I)$, $\tau_{23}(\chi_I, \chi_{II})$, $\tau_{33}(\chi_I, \chi_{II})$), la puissance totale ($P_3^{ASE}$) de l'émission spontanée amplifiée (ASE) à la sortie de l'amplificateur à fibre est déterminée.

**5.** Procédé selon la revendication 4,
**caractérisé en ce que**
les trois contributions ASE pour un gain total ($G_0$) constant à la sortie du troisième étage amplificateur (V3) correspondent à

$$P_{13}^{ASE} = \int_{\lambda_0}^{\lambda_1} S_I^{ASE}(\lambda, \chi_I) \frac{G_0}{G_I^{ASE}(\lambda, \chi_I)} a_I a_{II}\, d\lambda = a_I a_{II} \cdot G_0 \cdot \tau_{13}(\chi_I)$$

$$P_{23}^{ASE} = \int_{\lambda_0}^{\lambda_1} S_{II}^{ASE}(\lambda, \chi_{II})\, G_{III}^{ASE}(\lambda, \chi_{III}) a_{II}\, d\lambda = a_{II}\, \tau_{23}(\chi_I, \chi_{II})$$

$$P_{33}^{ASE} = \int_{\lambda_0}^{\lambda_1} S_{III}^{ASE}(\lambda, \chi_{III})\, d\lambda = \tau_{33}(\chi_I, \chi_{II})$$

,

$S_I^{ASE}(\lambda, \chi_I)$, $S_{II}^{ASE}(\lambda, \chi_{II})$, $S_{III}^{ASE}(\lambda, \chi_{III})$ étant les densités de puissance spectrales produites dans les étages amplificateurs (V1, V2, V3) respectifs à leurs sorties, $G_{III}^{ASE}(\lambda, \chi_{III})$ étant le gain spectral du troisième étage amplificateur (V3),

$G_0$ étant l'amplification totale des trois étages amplificateurs (V1, V2, V3), et

$a_I$, $a_{II}$ étant des amortissements entre le premier ou respectivement le deuxième étage amplificateur (V1, V2) et l'étage amplificateur respectivement suivant.

**6.** Procédé selon l'une des revendications 4 ou 5,
**caractérisé en ce que**

- en plus, des valeurs étalonnées des trois paramètres ($\tau_{13}(\chi_I)$, $\tau_{23}(\chi_I, \chi_{II})$, $\tau_{33}(\chi_I, \chi_{II})$) sont enregistrées dans un tableau, lesquelles, pour un gain total ($G_0$) constant, dépendent des inversions moyennes ($\chi_I$, $\chi_{II}$) de seulement les deux étages amplificateurs (V1, V2), et

- à l'aide de valeurs étalonnées des trois paramètres ($\tau_{13}(\chi_I)$, $\tau_{23}(\chi_I, \chi_{II})$, $\tau_{33}(\chi_I, (\chi_{II}))$), la puissance totale ($P_3^{ASE}$) de l'émission spontanée amplifiée (ASE) à la sortie de l'amplificateur à fibre est déterminée.

**7.** Procédé selon l'une des revendications précédentes, **caractérisé en ce que** le calcul des puissances totales $(P_2^{ASE}\,;\,P_3^{ASE})$ de l'émission spontanée amplifiée (ASE) sur les sorties des étages amplificateurs (V2, V3) s'effectue en prenant en considération des valeurs d'amortissement ($a_I$, $a_{II}$).

**8.** Procédé selon l'une des revendications 4 à 7, **caractérisé en ce que** d'autres contributions de puissance de l'ASE ($P_{ij}^{ASE}$ avec i = 1, 2, 3, 4, 5, ... et j = 4, 5, ...) pour un amplificateur optique à fibre avec plus de trois étages amplificateurs sont déterminées pour la détermination des puissances totales de l'émission spontanée amplifiée (ASE) sur d'autres étapes amplificateurs ($V_j$) de l'amplificateur optique à fibre et sont additionnées à des valeurs de puissance totale sur les sorties des autres étapes amplificateurs.

**9.** Procédé selon l'une des revendications précédentes, **caractérisé en ce que** toutes les contributions de puissance $(P_{ij}^{ASE})$ pour les puissances totales de l'émission spontanée amplifiée (ASE) sont déterminées au moyen de valeurs ($\tau_{kl}(\chi_I,\chi_{II},\chi_{III},...)$ sous forme de tableau qui ont été enregistrées dans le tableau (TAB).

**10.** Procédé selon l'une des revendications précédentes, **caractérisé en ce que** des facteurs de proportionnalité entre des contributions ASE et des valeurs sous forme de tableau sont déterminés par des caractéristiques de système telles que des valeurs d'amortissement ou des valeurs de gain total.

**11.** Procédé selon l'une des revendications précédentes, **caractérisé en ce que** les valeurs sous forme de tableau sont régulièrement ré-étalonnées de sorte que des effets de vieillissement ou d'élargissement de l'amplificateur optique à fibre sont pris en considération.

**12.** Amplificateur optique à fibre destiné à la réalisation du procédé selon l'une des revendications 1 à 3, avec deux étages amplificateurs (V1, V2), un premier moyen de mesure de puissance ($M_{IN1}$) étant disposé sur le premier étage amplificateur (V1) à l'entrée, un deuxième moyen de mesure de puissance ($M_{OUT2}$) étant disposé sur la sortie du deuxième étage amplificateur (V2), et un moyen de mesure de puissance ($M_{IN2}$) étant disposé entre le premier et le deuxième étage amplificateur (V1, V2), avec une régulation du gain ($G_{MO\text{-}NITOR1}$, $G_{MONITOR2}$) à laquelle est respectivement affecté un dispositif de détermination de l'inversion moyenne de ces étages amplificateurs (V1, V2), **caractérisé en ce que**

- l'amplificateur à fibre présente des moyens destinés au calcul des contributions ASE $(P_{11}^{ASE}\,;\,P_{12}^{ASE},\,P_{22}^{ASE})$ de l'émission spontanée amplifiée (ASE) avec des facteurs liés au système ($a_I$, $a_{II}$, $G_o$, ...) ou des paramètres qui leur sont proportionnels ($\tau_1(\chi_I)\,;\,\tau_{12}(\chi_I)$, $\tau_{22}(\chi_I)$) en fonction des inversions moyennes ($\chi_I$, $\chi_{II}$) de l'un des deux étages amplificateurs (V1, V2),
- l'amplificateur à fibre présente un tableau (TAB) dans lequel des valeurs étalonnées de ces contributions ASE $(P_{11}^{ASE}\,;\,P_{12}^{ASE},\,P_{22}^{ASE})$ ou les paramètres ($\tau_1,(\chi_I)\,;\,\tau_{12}(\chi_I)$, $\tau_{22}(\chi_I)$) sont enregistrés en fonction d'inversions moyennes ($\chi_I$, $\chi_{II}$) de l'un des deux étages amplificateurs (V1, V2), et
- un équipement de calcul ($ADD_{LIN}$) est affecté au tableau (TAB) en vue de la détermination des puissances totales $(P_2^{ASE})$ de l'émission spontanée amplifiée (ASE) sur les sorties des étages amplificateurs (V1, V2).

**13.** Amplificateur optique à fibre destiné à la réalisation du procédé selon l'une des revendications 4 à 11, avec trois étages amplificateurs (V1, V2, V3), un premier moyen de mesure de puissance ($M_{IN1}$) étant disposé sur le premier étage amplificateur (V1) à l'entrée, un deuxième moyen de mesure de puissance ($M_{OUT3}$) étant disposé à la sortie du troisième étage amplificateur (V3), et respectivement un moyen de mesure de puissance ($M_{IN2}$, $M_{IN3}$) étant disposé entre les étages amplificateurs (V1, V2, V3), avec une régulation du gain ($G_{MONITOR1}$, $G_{MONITOR2}$, $G_{MONITOR3}$) à laquelle est respectivement affecté un dispositif de détermination de l'inversion moyenne de ces étages amplificateurs (V1, V2, V3), **caractérisé en ce que**

- l'amplificateur à fibre présente des moyens destinés au calcul des contributions ASE $\left( P_{11}^{ASE} \; ; \; P_{12}^{ASE} \, , \; P_{22}^{ASE} \; ; \; P_{13}^{ASE} \, , \; P_{23}^{ASE} \, , \; P_{33}^{ASE} \right)$ de l'émission spontanée amplifiée (ASE) avec des facteurs liés au système ($a_I$, $a_{II}$, $G_o$, ...) ou des paramètres qui leur sont proportionnels
($\tau_1(\chi_I)$ ; $\tau_{12}(\chi_I, \chi_{II})$, $\tau_{22}(\chi_{II})$ ; $\tau_{13}(\chi_I)$, $\tau_{23}(\chi_I, \chi_{II})$, $\tau_{33}(\chi_I, \chi_{II})$ en fonction des inversions moyennes ($\chi_I$, $\chi_{II}$, ...) de
deux des trois étages amplificateurs (V1, V2, V3),
- l'amplificateur à fibre présente un tableau (TAB) dans lequel des valeurs étalonnées de ces contributions ASE
$\left( P_{11}^{ASE} \; ; \; P_{12}^{ASE} \, , \; P_{22}^{ASE} \; ; \; P_{13}^{ASE} \, , \; P_{23}^{ASE} \, , \; P_{33}^{ASE} \right)$ ou les paramètres ($\tau_1(\chi_I)$ ;
$\tau_{12}(\chi_I, \chi_{II})$, $\tau_{22}(\chi_{II})$ ; $\tau_{13}(\chi_I)$, $\tau_{23}(\chi_I, \chi_{II})$, $\tau_{33}(\chi_I, \chi_{II})$)) sont enregistrés en fonction d'inversions moyennes ($\chi_I$, $\chi_{II}$)
de deux des trois étages amplificateurs (V1, V2, V3), et
- un équipement de calcul ($ADD_{LIN}$) est affecté au tableau (TAB) en vue de la détermination des puissances
totales $\left( P_2^{ASE} \, , \; P_3^{ASE} \right)$ de l'émission spontanée amplifiée (ASE) sur les sorties des étages amplificateurs
(V1, V2, V3).

**14.** Amplificateur optique à fibre selon la revendication 12 ou 13,
**caractérisé en ce que**
l'unité de calcul présente un additionneur linéaire et/ou un multiplicateur qui, quand les valeurs sous forme de tableau
ont été étalonnées sans facteurs liés au système tels que des valeurs d'amortissement ou des valeurs de gain
constantes ($a_I$, $a_{II}$, $G_o$, ...), pondère avec des facteurs liés au système les valeurs sous forme de tableau en provenance du tableau (TAB).

**15.** Amplificateur optique à fibre selon l'une des revendications 12 à 14,
**caractérisé en ce que**
les étages amplificateurs (V1, V2, V3, ...) sont réglés conformément aux puissances ASE
$\left( P_1^{ASE} \, , \; P_2^{ASE} \, , \; P_3^{ASE} \, , \; ... \right)$ déterminées sur leurs sorties.

FIG 1

FIG 2

FIG 3

EP 1 807 948 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1085683 A1
- EP 1130802 A1

- US 6064501 A